# EUROPEAN PATENT APPLICATION

(11) **EP 4 472 221 A1**
(43) Date of publication of application: **04.12.2024**
(21) Application number: 23746706.3
(22) Date of filing: 13.01.2023
(51) Int. Cl.: H04N 23/60, G06T 7/00, G08G 1/04, H04N 7/18

(54) **STATE ESTIMATION DEVICE, STATE ESTIMATION METHOD, AND STATE ESTIMATION PROGRAM**

(30) Priority: 27.01.2022 JP 2022011231
(71) Applicant: Kyocera Corporation, Kyoto-shi, Kyoto 612-8501 (JP)
(72) Inventor: ARATA, Koji, Kyoto-shi, Kyoto 612-8501 (JP); HU, Zhiqiang, Kyoto-shi, Kyoto 612-8501 (JP); MIKUNI, Yoshitaka, Kyoto-shi, Kyoto 612-8501 (JP)
(74) Representative: Viering, Jentschura & Partner mbB Patent- und Rechtsanwälte
(86) International application number: PCT/JP2023/000834
(87) International publication number: WO 2023/145492

(57) **Abstract**

A state estimation device (100) according to one aspect includes: an estimator (142) configured to estimate an installation state parameter of an imaging device having obtained image data through imaging, by using a state estimation model (M1) subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and a diagnosis unit (143) configured to diagnose an installation state of the imaging device based on the estimated installation state parameter.

## Description

### TECHNICAL FIELD

The present application relates to a state estimation device, a state estimation method, and a state estimation program.

### BACKGROUND OF INVENTION

Known cameras installed on roads or roadsides or the like of the roads perform calibration. Patent Document 1 discloses performing calibration using a measurement vehicle on which a GPS receiver, a data transmitter, a marker, and the like are mounted. Patent Document 2 discloses estimating road plane parameters based on a direction of a line existing on a road plane and a direction expressed by an arithmetic expression including the road plane parameters, when the direction of the line is input in a captured image.

### CITATION LIST

### PATENT LITERATURE

Patent Document 1: JP 2012-10036 A
Patent Document 2: JP 2017-129942 A

### SUMMARY

### PROBLEM TO BE SOLVED

According to Patent Document 1, a measurement vehicle is necessary, and an operator is necessary when performing calibration. Patent Document 2 has the problem that lanes on a road need to be manually input into an image, which takes time and effort. Accordingly, there has been a need for a conventional imaging device that images roads to estimate an installation state of the imaging device that images a traffic environment without requiring human work or traffic regulation.

### SOLUTION TO PROBLEM

A state estimation device according to one aspect includes: an estimator configured to estimate an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and a diagnosis unit configured to diagnose an installation state of the imaging device based on the estimated installation state parameter.

A state estimation method according to one aspect includes: estimating, by a computer, an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and diagnosing, by the computer, an installation state of the imaging device based on the estimated installation state parameter.

A state estimation program according to one aspect causes a computer to execute: estimating an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and diagnosing an installation state of the imaging device based on the estimated installation state parameter.

### BRIEF DESCRIPTION OF THE DRAWINGS

FIG. 1 is a diagram for describing a relationship example between a learning device and a state estimation device according to an embodiment.
FIG. 2 is a diagram illustrating an example of image data obtained through imaging by the imaging device illustrated in FIG. 1.
FIG. 3 is a diagram illustrating an example of a configuration of a learning device according to the embodiment.
FIG. 4 is a diagram illustrating an example of a CNN used by the learning device illustrated in FIG. 3.
FIG. 5 is a diagram illustrating an example of a configuration of the state estimation device according to the embodiment.
FIG. 6 is a flowchart illustrating an example of a state estimation method executed by the state estimation device.
FIG. 7 is a flowchart illustrating an example of a processing procedure of an object detection process executed by the state estimation device.
FIG. 8 is a diagram for describing an example of tracking processing of image data including traffic objects.
FIG. 9 is a diagram for describing an estimation example of installation state parameters of the state estimation device according to the embodiment.
FIG. 10 is a diagram for describing an estimation example of the installation state parameters of the state estimation device according to the embodiment.
FIG. 11 is a diagram for describing an estimation example of the installation state parameters of the state estimation device according to the embodiment.
FIG. 12 is a diagram for describing another example of result diagnosis executed by the state estimation device.

### DESCRIPTION OF EMBODIMENTS

A plurality of embodiments for implementing a state estimation device, a learning device, a state estimation method, a state estimation program, and the like according to the present application will be described in detail with reference to the drawings. Note that the following description is not intended to limit the present invention. Constituent elements in the following description include those that can be easily assumed by a person skilled in the art, those that are substantially identical to the constituent elements, and those within a so-called range of equivalents. In the following description, the same reference signs may be assigned to the same constituent elements. Redundant description may be omitted.

### System overview

Connecting a captured image and the real world using information about an installation state of an imaging device in a conventional system needs a dedicated jig and work. Since imaging devices are installed near roads, road regulation work needs to be performed for conventional systems. The state estimation device according to the present embodiment makes it unnecessary to perform work that uses a jig, road regulation work, and the like, and contributes to spreading the use of an imaging device 10 in traffic environments.

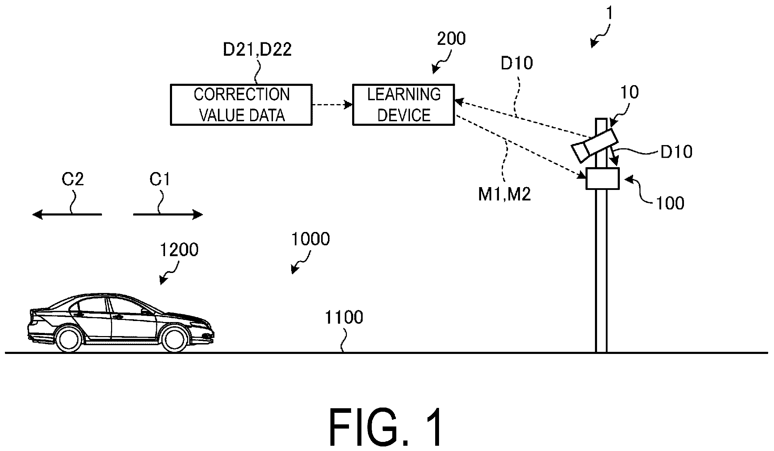

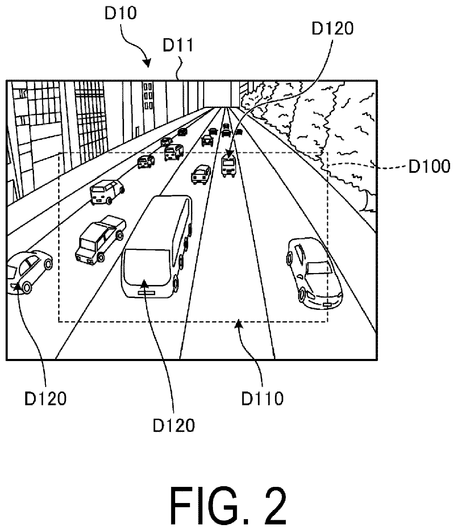

FIG. 1 is a diagram for describing a relationship example between the learning device and the state estimation device according to the embodiment. FIG. 2 is a diagram illustrating an example of image data obtained through imaging by an imaging device illustrated in FIG. 1. As illustrated in FIG. 1, a system 1 includes the imaging device 10 and a state estimation device 100. The imaging device 10 can acquire image data D10 obtained by imaging a traffic environment 1000. The state estimation device 100 has a function of acquiring the image data D10 from the imaging device 10 and estimating the installation state of the imaging device 10 based on the image data D10. The imaging device 10 and the state estimation device 100 are capable of communicating by wire or wirelessly. A case where the system 1 includes one imaging device 10 and one state estimation device 100 will be described using the example illustrated in FIG. 1 for simplification of description. However, a plurality of the imaging devices 10 and the state estimation devices 100 may be used.

The imaging device 10 is installed so as to be able to image the traffic environment 1000 including a road 1100 and a traffic object 1200 moving on the road 1100. The traffic object 1200 moving on the road 1100 includes, for example, a vehicle or a person that can move on the road 1100. The traffic object 1200 includes, for example, a large-sized car, an ordinary car, large-sized special car, a large-sized motorcycle, an ordinary motorcycle, and a small-sized special car defined by the Road Traffic Act, but may include another vehicle or moving object. Note that the large car includes a car whose total weight is 8000 kg or more, a car whose maximum loading capacity is 5000 kg or more, or a car (such as a bus or truck) whose boarding capacity is 11 persons or more. The imaging device 10 can electronically capture images using an imaging sensor such as a Charge Coupled Device (CCD) or a Complementary Metal Oxide Semiconductor (CMOS). The imaging device 10 is installed with an imaging direction of the imaging device 10 directed to the road plane of the traffic environment 1000. The imaging device 10 can be installed at, for example, roads, intersections, parking lots, and the like.

In the example illustrated in FIG. 1, the imaging device 10 is installed on a roadside at an installation angle at which the imaging device 10 can capture a bird's-eye view image of an imaging area of the traffic environment 1000 including the road 1100 and surroundings thereof. The imaging device 10 obtains the image data D10 by imaging the traffic environment 1000. The imaging device 10 may be provided such that the imaging direction is fixed, or may be provided such that the imaging direction can be changed by a movable mechanism at the same position. As illustrated in FIG. 2, the image data D10 of the imaging device 10 is data that indicates an image D11 including a first area D110 indicating a plurality of the roads 1100 and a second area D 120 indicating the traffic object 1200 passing on the road 1100. The imaging device 10 supplies the obtained image data D10 to the state estimation device 100. In the present embodiment, the image data D10 includes, for example, two-dimensional images such as moving images and still images. In the image data D10, a predetermined area D100 is preset to the image D11. The predetermined area D100 is an area including the traffic object 1200 that can be used for estimation, and can be appropriately set based on the traffic environment 1000 to be imaged. The predetermined area D100 may be the entire area of the image D 11. The traffic object 1200 that can be used for estimation includes, for example, the traffic object 1200 used as a correct value of machine learning of a state estimation model M1. The traffic object 1200 that can be used for estimation is the traffic object 1200 that is suitable for estimation of the state estimation model M1.

As illustrated in FIG. 1, the state estimation device 100 may be provided near the imaging device 10 or may be provided at a position away from the imaging device 10. A case where the state estimation device 100 receives supply of the image data D10 from the one imaging device 10 will be described using the example illustrated in FIG. 1 for simplification of the description. However, the image data D10 may be supplied from each of the plurality of the imaging devices 10. The traffic object 1200 is moving on a lane toward the imaging device 10 along a road direction C1, and a road direction C2 indicates the direction of an oncoming lane.

The state estimation device 100 has a function of managing installation state parameters of the imaging device 10. The installation state parameters include, for example, an installation angle and an installation position of the imaging device 10. The installation state parameters may include, for example, the number of pixels of the imaging device 10 and the size of the image D 11. By using the state estimation model M1 subjected to machine learning by a learning device 200, the state estimation device 100 can estimate the installation state parameters of the imaging device 10 that has obtained the image data D10 through imaging. The state estimation device 100 can input the image data D10 to the state estimation model M1, and estimate an output of the state estimation model M1 as the installation state parameters of the imaging device 10.

The learning device 200 is, for example, a computer or a server device. The learning device 200 may or may not be included in the configuration of the system 1. The learning device 200 acquires a plurality of pieces of first training data including the image data D 10 obtained by imaging the traffic environment 1000 including the traffic object 1200, and correct value data D21 of the installation state parameters of the imaging device 10 having obtained the image data D10 through imaging. The correct value data D21 includes, for example, data indicating correct values of an installation angle (α, β, and γ), an installation position (x, y, and z), the number of pixels, and a size of the image D11 of the imaging device 10. The correct value data D21 is an example of first correct value data. The installation angle includes, for example, the pitch angle α in a direction in which the imaging device 10 looks down, the yaw angle β at which the imaging device 10 can laterally swing the imaging direction, and the roll angle γ in a direction in which the imaging device 10 tilts. The installation position has, for example, a position (x and z) and a height y on a road surface. The correct value data D21 may be, for example, a correct value obtained by combining two values of α and γ that enable identification of an orientation with respect to the road surface. The correct value data D21 may be, for example, a correct value obtained by combining three values of α, γ, and y that enable identification of a scale. The correct value data D21 may be, for example, a correct value obtained by combining four values of α, β, γ, and y that enable identification of a main road direction. The correct value data D21 may be, for example, a correct value obtained by combining six values of α, β, γ, x, y, and z used for general calibration.

The learning device 200 generates the state estimation model M1 for estimating the installation state parameters of the imaging device 10 that has obtained the input image data D10 through machine learning using a plurality of pieces of first training data. For supervised machine learning, for example, an algorithm such as a neural network, linear regression, or logistic regression can be used. The state estimation model M1 is a model obtained by performing machine learning on the image data D 10 and the correct value data D21 of the plurality of pieces of training data so as to estimate the installation state parameters of the imaging device 10 that has obtained the input image data D10 through imaging. When receiving an input of the image data D10, the state estimation model M1 estimates the installation state parameters of the imaging device 10 that has obtained the image data D 10 through imaging, and outputs the estimation result. By providing the generated state estimation model M1 to the state estimation device 100, the learning device 200 can contribute to making a dedicated tool or human work unnecessary for the state estimation device 100 to calculate the installation state of the imaging device 10. An example of the learning device 200 will be described later.

The state estimation device 100 can input the image data D to the state estimation model M1 provided by the learning device 200, and estimate the installation state parameters obtained by obtaining the image data D10 through imaging, based on the output of the state estimation model M1. The state estimation device 100 can diagnose the installation state of the imaging device 10 based on the estimated installation state parameters. Thus, the state estimation device 100 can make a dedicated jig or human work unnecessary for calculation of the installation state of the imaging device 10 at a time of installation of the imaging device 10 in the traffic environment 1000, at a time of maintenance of the imaging device 10, or the like. The state estimation device 100 can make traffic regulation unnecessary by making a jig or human work unnecessary. As a result, the state estimation device 100 can contribute to spreading the use of the imaging devices 10 installed in the traffic environment 1000, and can improve efficiency of maintenance.

The learning device 200 can acquire a plurality of pieces of second training data including the image data D10 obtained by the imaging device 10 by imaging the traffic environment 1000 including the traffic object 1200, and correct value data D22 of object detection in the image data D10. The correct value data D22 includes, for example, data indicating correct values of a position, a size, a type, and the number of the traffic objects 1200 in the image D 11. The correct value data D22 is an example of the second correct value data. The correct value data D22 includes, for example, a total of five pieces of data that includes two pieces of data of the position (x and y) of an object in the image D 11, two pieces of data of the size (w and h) of the object, and one data of an object type, and the number of which corresponds to the number of objects in the image D11. The object type includes, for example, a person, a large-sized car, an ordinary car, a large-sized special car, a large-sized motorcycle, an ordinary motorcycle, a small-sized special car, and a bicycle.

The learning device 200 generates an object estimation model M2 for estimating at least one selected from the group consisting of a position, a size, and a type of the traffic object 1200 (object) in the traffic environment 1000 indicated by the input image data D10 by machine learning that uses a plurality of pieces of the second training data. The object estimation model M2 is a model obtained by performing machine learning on the image data D10 of a plurality of pieces of training data and the correct value data D22 so as to estimate the position, the size, and the type of the traffic object 1200 in the traffic environment 1000 indicated by the input image data D10. When receiving an input of the image data D 10, the object estimation model M2 estimates the position, the size, the type, and the number of the traffic objects 1200 in the traffic environment 1000 indicated by the image data D10, and outputs an estimation result. The learning device 200 can provide the generated object estimation model M2 to the state estimation device 100.

The state estimation device 100 has a function of performing processing such that the image data D10 obtained by the imaging device 10 by imaging the traffic environment 1000 includes the traffic object 1200 used for estimation. For example, the state estimation device 100 can perform processing such that the image data D10 obtained by the imaging device 10 by imaging the traffic environment 1000 includes the traffic object 1200 used for estimation using the object estimation model M2. Thus, the state estimation device 100 can input the image data D10 that can be used for estimation of the installation state parameters of the imaging device 10 to the state estimation model M1, and improve estimation accuracy of the state estimation model M1. The image data D10 that can be used for estimation of the installation state parameters of the imaging device 10 is data that can improve a probability of the estimation result of the state estimation model M1.

The system 1 can provide a function of managing maintenance of the one or more imaging devices 10 by using the estimation result of the state estimation device 100. The system 1 can provide a function of instructing change of the installation state of the imaging device 10 based on the installation state parameters and the installation position estimated by the state estimation device 100.

### Learning device

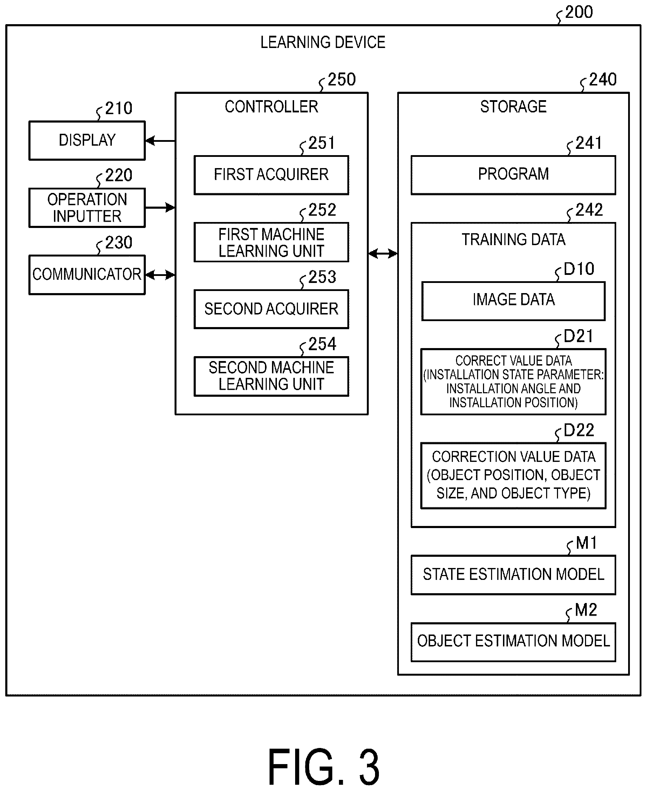

FIG. 3 is a diagram illustrating an example of a configuration of the learning device 200 according to the embodiment. As illustrated in FIG. 3, the learning device 200 includes a display 210, an operation inputter 220, a communicator 230, a storage 240, and a controller 250. The controller 250 is electrically connected to the display 210, the operation inputter 220, the communicator 230, the storage 240, and the like. In the present embodiment, an example will be described where the learning device 200 executes machine learning using a Convolutional Neural Network (CNN) that is one of neural networks.

The display 210 is configured to display various types of information under the control of the controller 250. The display 210 includes a display panel such as a liquid crystal display and an organic EL display. The display 210 displays information such as a character, a diagram, and an image, in accordance with a signal input from the controller 250.

The operation inputter 220 includes one or more devices for receiving an operation of a user. The devices for receiving the operation of the user include, for example, a key, a button, a touch screen, and a mouse. The operation inputter 220 can supply a signal corresponding to a received operation to the controller 250.

The communicator 230 can communicate with, for example, the state estimation device 100 and other communication devices. The communicator 230 can support various communication standards. The communicator 230 can transmit and receive various types of data via, for example, a wired or wireless network. The communicator 230 can supply received data to the controller 250. The communicator 230 can transmit data to a transmission destination designated by the controller 250.

The storage 240 can store a program and data. The storage 240 is also used as a work area that temporarily stores the processing result of the controller 250. The storage 240 may include a freely selected non-transitory storage medium such as a semiconductor storage medium and a magnetic storage medium. The storage 240 may include a plurality of types of storage media. The storage 240 may include a combination of a portable storage medium such as a memory card, an optical disk, a magneto-optical disk, or the like and a device for reading a storage medium. The storage 240 may include a storage device used as a temporary storage area such as a Random Access Memory (RAM).

The storage 240 can store, for example, various types of data such as a program 241, training data 242, the state estimation model M1, and the object estimation model M2. The program 241 causes the controller 250 to execute a function of generating using the CNN the state estimation model that estimates the installation state parameters of the imaging device 10 that has imaged the image data D10. The program 241 causes the controller 250 to execute a function of generating using the CNN the object estimation model that estimates information about an object indicated by the image data D10.

The training data 242 is learning data, training data, or the like used for machine learning. The training data 242 includes data obtained by combining the image data D10 used for machine learning of state estimation, and the correct value data D21 associated with the image data D10. The image data D10 is input data of supervised learning. For example, the image data D10 indicates a color image that is obtained by imaging the traffic environment 1000 including the traffic object 1200, and whose number of pixels is 1280 × 960. The correct value data D21 includes data indicating the installation state parameters of the imaging device 10 that has imaged the image data D10. The correct value data D21 is correct answer data of supervised machine learning. The correct value data D21 includes, for example, data indicating six parameters (values) of an installation angle (α, β, and γ) and an installation position (x, y, and z) of the imaging device 10.

The training data 242 further includes data obtained by combining the image data D10 used for machine learning of object estimation and the correct value data D22 associated with the image data D10. For example, the image data D10 indicates a color image that is obtained by imaging the traffic environment 1000 including the traffic object 1200, and whose number of pixels is 1280 × 960. The correct value data D22 includes data that indicates an object position, an object size, and an object type of the object (traffic object 1200) indicated by the image data D10, and the number of which corresponds to the number of the traffic objects 1200 (objects) included in the image. The object position includes, for example, coordinates (x, y) in the associated image data D10. The object size includes, for example, the width and the height of the object indicated by the associated image data D10.

The state estimation model M1 is a learning model generated by extracting features, regularity, patterns, and the like of the image data D10 using the image data D10 and the correct value data D21 included in the training data 242, and performing machine learning on a relationship with the correct value data D21. When receiving an input of the image data D10, the state estimation model M1 predicts the training data 242 similar to the features or the like of the image data D10, estimates the installation state parameters of the imaging device 10 that has imaged the image data D10 based on the correct value data D21, and outputs the estimation result.

The object estimation model M2 is a learning model generated by extracting features, regularity, patterns, and the like of the object of the image data D10 using the image data D10 and the correct value data D22 included in the training data 242, and performing machine learning on a relationship with the correct value data D22. When receiving an input of the image data D10, the object estimation model M2 predicts the training data 242 similar to the features or the like of the object of the image data D 10, estimates the position, the size, the type, or the like of the object in the image indicated by the image data D10 based on the correct value data D22, and outputs the estimation result.

The controller 250 is an arithmetic processing device. Examples of the arithmetic processing device include, but are not limited to, a central processing unit (CPU), a system-on-a-chip (SoC), a micro control unit (MCU), a field-programmable gate array (FPGA), and a coprocessor. The controller 250 can comprehensively control the operation of the learning device 200 and implement various types of functions.

Specifically, the controller 250 can execute instructions included in the program 241 stored in the storage 240 while referring, as appropriate, to information stored in the storage 240. Then, the controller 250 can control the functional units in accordance with the data and the instructions, thereby implementing various types of functions. The functional units include, but are not limited to, for example, the display 210 and the communicator 230.

The controller 250 includes functional units such as a first acquirer 251, a first machine learning unit 252, a second acquirer 253, and a second machine learning unit 254. The controller 250 implements the functions of the first acquirer 251, the first machine learning unit 252, the second acquirer 253, the second machine learning unit 254, and the like by executing the program 241. The program 241 is a program for causing the controller 250 of the learning device 200 to function as the first acquirer 251, the first machine learning unit 252, the second acquirer 253, and the second machine learning unit 254.

The first acquirer 251 acquires, as training data, the image data D10 obtained by imaging the traffic environment 1000 including the traffic object 1200, and the correct value data D21 of the installation state parameters of the imaging device 10 having imaged the image data D10. The first acquirer 251 acquires the image data D10 and the correct value data D21 from a preset storage destination, a storage destination selected by the operation inputter 220, or the like to associate with the training data 242 in the storage 240 to store. The first acquirer 251 acquires a plurality of pieces of the image data D10 and the correct value data D21 used for machine learning.

The first machine learning unit 252 generates the state estimation model M1 that estimates the installation state parameters of the imaging device 10 that has imaged the input image data D10 by machine learning that uses the plurality of pieces of training data 242 (first training data) acquired by the first acquirer 251. The first machine learning unit 252 constructs the CNN based on, for example, the training data 242. The CNN is constructed as a network such that the CNN receives an input of the image data D10 and outputs an identification result for the image data D10. The identification result includes information for estimating the installation state parameters of the imaging device 10 that has imaged the image data D10.

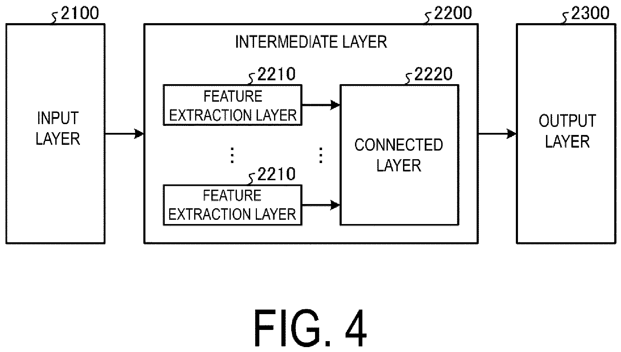

FIG. 4 is a diagram illustrating an example of the CNN used by the learning device 200 illustrated in FIG. 3. The first machine learning unit 252 constructs the CNN illustrated in FIG. 4 based on the acquired training data 242. As is known, the CNN includes an input layer 2100, an intermediate layer 2200, and an output layer 2300. The input layer 2100 can supply the input image data D10 to the intermediate layer 2200. The input image data D10 indicates, for example, data indicating a color image of 640 × 640 × 3.

The intermediate layer 2200 includes a plurality of feature extraction layers 2210 and a connected layer 2220. Each of the plurality of feature extraction layers 2210 extracts a different feature of the image D11 indicated by the image data D10. The features of the image D11 to be extracted include for example, features related to the road 1100, a lane, and the like in an image. The feature extraction layer 2210 includes, for example, one or more convolution layers and a pooling layer, and extracts desired features from the input image data D10. The convolution layer of the feature extraction layer 2210 is a layer that extracts a portion of the image D11 that resembles the shape of a filter (weight) by performing a convolution operation on the input data. The convolution layer is configured to apply an activation function to a feature map that is an operation result. In the present embodiment, a Rectified linear unit (Relu) function is applied as the activation function. However, a sigmoid function or the like may be applied. The pooling layer of the feature extraction layer 2210 performs processing of summarizing the features of the image data D10 obtained by convolution into a maximum value or an average value, and thereby regarding the features as the same features even when the positions of the extracted features vary. The feature extraction layer 2210 can extract more sophisticated and complex features by increasing the numbers of convolution layers and pooling layers to learn an optimum output to be obtained. The connected layer 2220 connects the features extracted by the plurality of feature extraction layers 2210 to output to the output layer 2300.

The output layer 2300 estimates the installation state parameters of the imaging device 10 that has imaged the image data D10 based on the features extracted by the intermediate layer 2200 and the correct value data D21. The output layer 2300 specifies the correct value data D21 associated with the features similar to the features outputted by the connected layer 2220, and outputs the installation state parameters indicated by the correct value data D21.

By performing machine learning using the plurality of pieces of training data 242 (first training data) acquired by the first acquirer 251, the first machine learning unit 252 determines weights and the like of the intermediate layer 2200, sets the weights to the CNN, and generates the state estimation model M1 to estimate the installation state parameters of the imaging device 10 that has imaged the input image data D10. The first machine learning unit 252 stores the generated state estimation model M1 in the storage 240. Thus, when receiving an input of the image data D10, the state estimation model M1 can output a result obtained by estimating the installation state parameters of the imaging device 10 that has imaged the image data D10.

The second acquirer 253 illustrated in FIG. 3 acquires, as the training data 242, the image data D10 obtained by the imaging device 10 by imaging the traffic environment 1000 including the traffic object 1200, and the correct value data D22 of object detection in the image data D10. The second acquirer 253 acquires the image data D10 and the correct value data D22 from a preset storage destination, a storage destination selected by the operation inputter 220, or the like to associate with the training data 242 in the storage 240 to store. The second acquirer 253 acquires the plurality of pieces of the image data D10 and the correct value data D2 used for machine learning.

The second machine learning unit 254 generates the object estimation model M2 that estimates at least one selected from the group consisting of the position, the size, and the type of the traffic object 1200 in the traffic environment 1000 indicated by the input image data D10 by machine learning that uses the training data 242 (second training data). The second machine learning unit 254 constructs a CNN that supports detection of the traffic object 1200 (object) based on, for example, the training data 242. The CNN is constructed as a network that receives an input of the image data D10 and outputs an estimation result obtained by estimating the position, the size, and the type of the traffic object 1200 in the traffic environment 1000 indicated by the image data D10. The identification result includes the position, the size, and the type of the traffic object 1200 indicated by the image data D10.

The second machine learning unit 254 constructs the CNN illustrated in FIG. 4 based on the acquired training data 242. The CNN includes the input layer 2100, the intermediate layer 2200, and the output layer 2300. The input layer 2100 can supply the input image data D10 to the intermediate layer 2200. The intermediate layer 2200 includes the plurality of feature extraction layers 2210 and the connected layer 2220. The feature extraction layer 2210 extracts the traffic object 1200 (features) in the image indicated by the image data D10. The feature extraction layer 2210 includes, for example, the plurality of convolution layers and the pooling layer, and extracts the traffic object 1200 as features from the input image data D10. By performing a convolution operation on the input data, the convolution layer of the feature extraction layer 2210 extracts a portion of the image D11 that resembles the shape of the filter (weight). The convolution layer is configured to apply the activation function to the feature map that is an operation result. The pooling layer of the feature extraction layer 2210 performs processing of summarizing the features of the image data D10 obtained by convolution into a maximum value or an average value, and thereby regarding the features as the same features even when the positions of the extracted features vary. The feature extraction layer 2210 can extract more sophisticated and complex features by increasing the numbers of convolution layers and pooling layers to learn an optimum output to be obtained. The connected layer 2220 connects the features extracted by the plurality of feature extraction layers 2210 to output to the output layer 2300.

The output layer 2300 estimates the traffic object 1200 in the image indicated by the image data D10 based on the features extracted by the intermediate layer 2200 and the correct value data D22. The output layer 2300 specifies the correct value data D22 associated with the features similar to the features outputted by the fully-connected layer 2220, and outputs the position, the size, and the type of the traffic object 1200 indicated by the correct value data D22 and the estimated number of the traffic objects 1200.

By performing machine learning using the plurality of pieces of training data 242 (second training data) acquired by the second acquirer 253, the second machine learning unit 254 determines weights and the like of the intermediate layer 2200, sets the weights to the CNN, and generates the object estimation model M2 to estimate the traffic object 1200 in the image D11 indicated by the input image data D10. The second machine learning unit 254 stores the generated object estimation model M2 in the storage 240. Thus, when receiving an input of the image data D 10, the object estimation model M2 can output results that indicate the position, the size, and the type of the traffic object 1200 indicated by the image data D 10, and the number of which corresponds to the number of the estimated traffic objects 1200.

The functional configuration example of the learning device 200 according to the present embodiment has been described above. Note that the above configuration described with reference to FIG. 3 is merely an example, and the functional configuration of the learning device 200 according to the present embodiment is not limited to the example. The functional configuration of the learning device 200 according to the present embodiment can be flexibly changed in accordance with specifications and operations.

### State estimation device

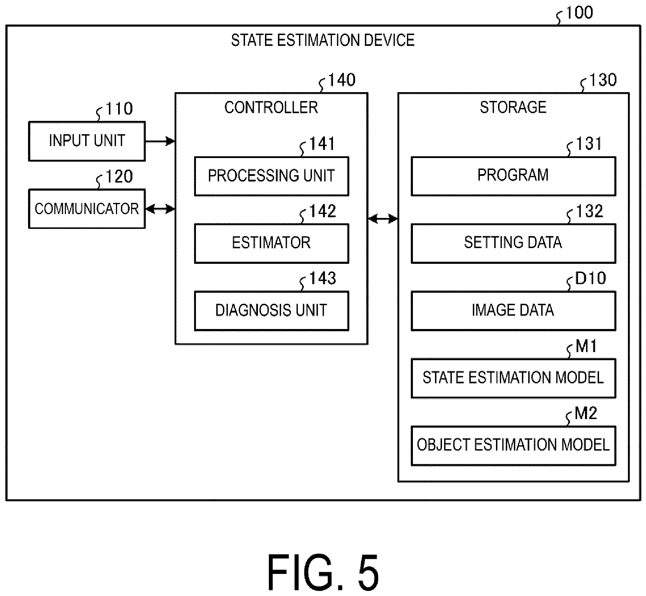

FIG. 5 is a diagram illustrating an example of a configuration of the state estimation device 100 according to the embodiment. As illustrated in FIG. 5, the state estimation device 100 includes an input unit 110, a communicator 120, a storage 130, and a controller 140. The controller 140 is electrically connected to the input unit 110, the communicator 120, the storage 130, and the like.

The input unit 110 receives an input of the image data D10 imaged by the imaging device 10. The input unit 110 includes, for example, a connector that can be electrically connected with the imaging device 10 via a cable. The input unit 110 supplies to the controller 140 the image data D10 input from the imaging device 10.

The communicator 120 can communicate with, for example, a management device that manages the learning device 200 and the imaging device 10, and the like. The communicator 120 can support various communication standards. The communicator 120 can transmit and receive various types of information via, for example, a wired or wireless network. The communicator 120 can supply received data to the controller 140. The communicator 120 can transmit data to a transmission destination designated by the controller 140.

The storage 130 can store a program and data. The storage 130 is also used as a work area that temporarily stores a processing result of the controller 140. The storage 130 may include a freely selected non-transitory storage medium such as a semiconductor storage medium and a magnetic storage medium. The storage 130 may include a plurality of types of storage media. The storage 130 may include a combination of a portable storage medium such as a memory card, an optical disk, a magneto-optical disk, or the like and a device for reading a storage medium. The storage 130 may include a storage device used as a temporary storage area such as a RAM.

The storage 130 can store, for example, a program 131, setting data 132, the image data D10, the state estimation model M1, the object estimation model M2, and the like. The program 131 can cause the controller 140 to execute functions related to various types of control for operating the state estimation device 100. The setting data 132 includes data such as various settings related to the operation of the state estimation device 100, and settings related to the installation state of the management target imaging device 10. The storage 130 can also store the plurality of image data D10 in chronological order. The state estimation model M1 and the object estimation model M2 are the machine learning models generated by the learning device 200.

The controller 140 is an arithmetic processing device. The arithmetic processing device includes, but is not limited to, for example, a CPU, an SoC, an MCU, an FPGA, and a coprocessor. The controller 140 comprehensively controls the operation of the state estimation device 100 and implements various types of functions.

More specifically, the controller 140 executes an instruction included in the program 131 stored in the storage 130 while referring, as appropriate, to data stored in the storage 130. The controller 140 controls the functional units in accordance with the data and the instructions, and implements the various types of functions. The functional units include, but are not limited to, for example, the input unit 110 and the communicator 120.

The controller 140 includes functional units such as a processing unit 141, an estimator 142, and a diagnosis unit 143. The controller 140 implements the function units such as the processing unit 141, the estimator 142, and the diagnosis unit 143 by executing the program 131. The program 131 is a program for causing the controller 140 of the state estimation device 100 to function as the processing unit 141, the estimator 142, and the diagnosis unit 143.

The processing unit 141 acquires the image data D10 imaged by the imaging device 10. The processing unit 141 pre-processes the image data D10 used by the estimator 142, and supplies the pre-processed image data D10 to the estimator 142. The processing unit 141 performs processing such that the image data D10 obtained by imaging the traffic environment 1000 includes the traffic object 1200 that can be used for estimation of the installation state parameters. The traffic object 1200 that can be used for estimation of the installation state parameters includes, for example, the traffic object 1200 that faces the front with respect to the imaging device 10, and the traffic object 1200 that is included in the training data 242 of machine learning, and is the traffic object 1200 that can be used for estimation. The processing unit 141 processes the image data D10 such that the traffic object 1200 that can be used for estimation of the installation state of the imaging device 10 is included in the image. The traffic object 1200 that can be used for estimation includes a vehicle and a person that have appropriate looks for estimation of the installation state parameters. The traffic objects 1200 that can be used for estimation include, for example, vehicles or persons that exist in a predetermined area D 100 of the image D 11, and vehicles or persons that are heading toward the imaging device 10. In the present embodiment, the predetermined area D100 includes, for example, a preset area in the image D11 or a central area of the image D 11. Examples of the traffic objects 1200 that are not suitable for estimation include large-sized vehicles such as trucks, passenger cars, and construction machines that exist in the predetermined area D 100 of the image D11 indicated by the image data D10. The processing unit 141 processes the image data D10 such that the image data D10 includes the traffic object 1200 that exists in the predetermined area D100 and/or the traffic object 1200 that faces the front with respect to the imaging device 10.

The processing unit 141 estimates at least one selected from the group consisting of the position, the size, and the type of the traffic object 1200 in the traffic environment 1000 indicated by the input image data D10 using the object estimation model M2 generated by the learning device 200. Based on the estimation result of the object estimation model M2, the processing unit 141 performs processing such that the image data D10 obtained by imaging the traffic environment 1000 includes the traffic object 1200 that can be used for estimation.

The processing unit 141 can provide a function of processing the image data D10 to delete or change from the image D11 the traffic object 1200 that is unnecessary for estimation of the installation state parameters of the imaging device 10. The processing unit 141 can provide a function of selecting from the plurality of pieces of image data D10 imaged in chronological order the image data D10 that includes the traffic object 1200 used for estimation of the installation state parameters of the imaging device 10 and does not include the traffic object 1200 that is unnecessary for the estimation. The processing unit 141 can provide a function of adding the traffic object 1200 that can be used for estimation of the installation state parameters to a preset setting area of the image data D10. As the setting area, for example, the entire area of the predetermined area D 100, a partial area in the predetermined area D100, or the like can be set as appropriate. The processing unit 141 can provide a function of determining the moving direction of the traffic object 1200 based on the plurality of pieces of image data D10 imaged in chronological order, and performing processing based on the determination result such that the image data D10 includes the traffic object 1200 used for estimation.

The estimator 142 can provide a function of estimating the installation state parameters of the imaging device 10 that has imaged the input image data D10 using the state estimation model M1 generated by the learning device 200. The estimator 142 can input the image data D10 processed by the processing unit 141 to the state estimation model M1, and estimate the installation state parameters of the imaging device 10 based on the output of the state estimation model M1. The estimator 142 can estimate a road area corresponding to a road plane in the image D11 based on the estimated installation state parameters.

The diagnosis unit 143 can provide a function of diagnosing the installation state of the imaging device 10 based on the installation state parameters estimated by the estimator 142. The diagnosis unit 143 can diagnose whether or not the estimation result of the installation state parameters is appropriate. The diagnosis unit 143 can diagnose the installation state of the imaging device 10 based on the installation state parameters estimated by the estimator 142 and the bird's-eye view state of the traffic object 1200 indicated by the image data D10. The diagnosis unit 143 can compare the orientation of the traffic object 1200 indicated by the image data D10 and the orientation of the traffic object 1200 calculated based on the installation state parameters estimated by the estimator 142, and diagnose the installation state of the imaging device 10 when the degree of coincidence is higher than a determination threshold value. The diagnosis unit 143 can compare the installation state parameters estimated by the estimator 142 and preset installation state parameters, and diagnose the installation state of the imaging device 10 based on a comparison result.

The controller 140 can provide a function of supplying the installation state parameters estimated by the estimator 142, a diagnosis result of the diagnosis unit 143, and the like to an external device, a database, and the like. For example, the controller 140 performs control of supplying the installation state parameters estimated by the estimator 142, the diagnosis result of the diagnosis unit 143, and the like via the communicator 120.

The functional configuration example of the state estimation device 100 according to the present embodiment has been described above. Note that the above configuration described with reference to FIG. 5 is merely an example, and the functional configuration of the state estimation device 100 according to the present embodiment is not limited to the example. The functional configuration of the state estimation device 100 according to the present embodiment can be flexibly changed in accordance with specifications and operations.

In the present embodiment, a case will be described where the controller 140 functions as the processing unit 141, the estimator 142, and the diagnosis unit 143 in the state estimation device 100. However, for example, the controller 140 may include the estimator 142 and the diagnosis unit 143, and may not include the processing unit 141. In this case, the state estimation device 100 may input the image data D10 to the state estimation model M1 without pre-processing the image data D10 imaged by the imaging device 10. In the system 1, the processing unit 141 of the state estimation device 100 may employ the configuration of the imaging device 10.

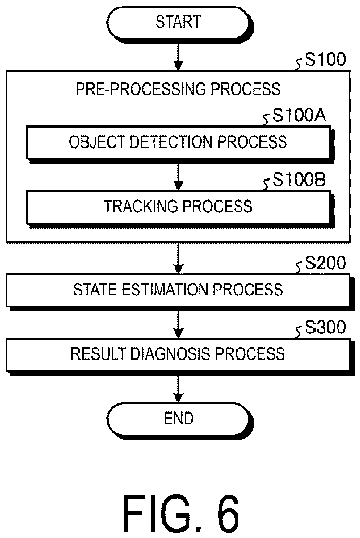

FIG. 6 is a flowchart illustrating an example of the state estimation method executed by the state estimation device 100. When diagnosing the installation state of the imaging device 10, the state estimation device 100 sequentially executes pre-processing process S100, state estimation process S200, and result diagnosis process S300 illustrated in FIG. 6 in order. The state estimation device 100 executes the method illustrated in FIG. 6 at an execution timing such as, for example, a time at installation of the imaging device 10, a time of maintenance, or a time at which execution is instructed from the outside.

Pre-processing process S 100 is a process of processing the image data D10 such that the traffic object 1200 that is necessary for estimation of the installation state of the imaging device 10 is included in the image. Pre-processing process S100 is implemented by the processing unit 141 of the controller 140. Pre-processing process S100 processes the image data D10 such that the image D11 including the traffic object 1200 facing the front with respect to the imaging device 10 is preferentially supplied to state estimation process S20. Pre-processing step S10 processes the image data D10 such that the image D11 including a large-sized car in the predetermined area D100 of the image D11 is not supplied to state estimation process S20. In pre-processing process S10, the image data D10 is processed to process information of the traffic object 1200 in the image D11 to improve reliability of estimating the installation state of the imaging device 10.

In the present embodiment, pre-processing process S100 includes object detection process S100A and tracking process S100B. Object detection process S100A is a process of detecting the traffic object 1200 (object) in the image D11. Tracking process S100B is a process of tracking the moving direction (direction) of the traffic object 1200 in the image D11. A case where pre-processing process S100 includes object detection process S100A and tracking process S100B will be described. However, for example, pre-processing process S100 may include only object detection step S100A. In pre-processing process S100, the state estimation device 100 may execute tracking step S100B after executing object detection process S100A, or may execute tracking step S100B and object detection process S100A in parallel.

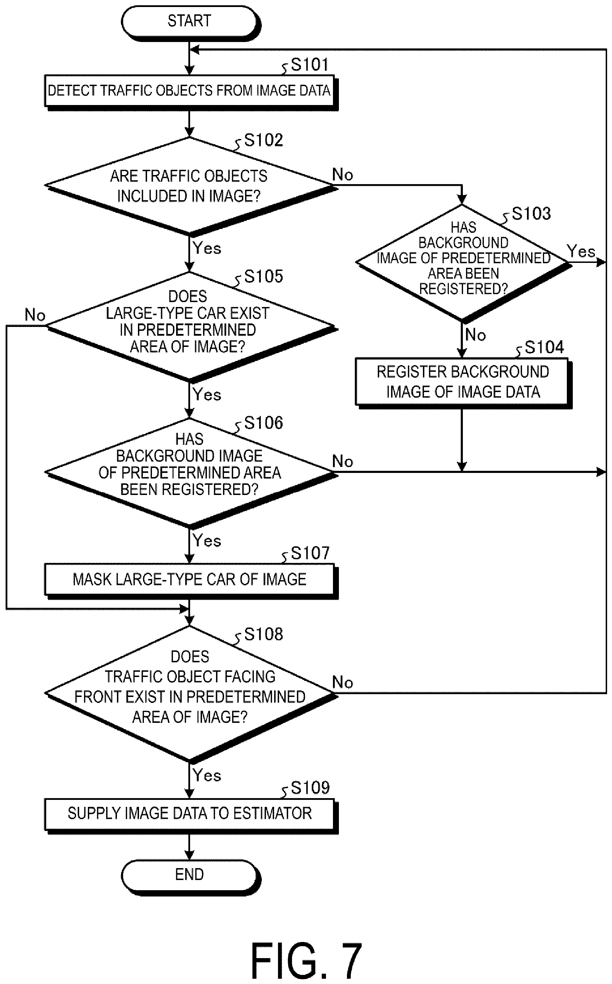

FIG. 7 is a flowchart illustrating an example of a processing procedure of object detection process S100A executed by the state estimation device 100. The processing procedure illustrated in FIG. 7 is implemented by the controller 140 of the state estimation device 100 by executing the program 131.

As illustrated in FIG. 7, the state estimation device 100 detects the traffic object 1200 from the image data D10 (step S101). For example, the state estimation device 100 inputs the image data D10 imaged by the imaging device 10 to the object estimation model M2, and detects the traffic object 1200 included in the image data D10 based on an estimation result output by the object estimation model M2. The state estimation device 100 detects the one or more traffic objects 1200 included in the predetermined area D100 of the image D11 indicated by the image data D10 based on the position, the size, and the type of the traffic object output by the object estimation model M2. The state estimation device 100 detects that the traffic object 1200 is not included in the predetermined area D100 of the image D11 based on an output result of the object estimation model M2. When the state estimation device 100 stores the estimation result of the object estimation model M2 and the detection result of the traffic object 1200 in the storage 130, the state estimation device 100 advances the processing to step S102.

The state estimation device 100 determines whether or not the traffic object 1200 is included in the image D11 (step S102). When, for example, the detection result in step S101 indicates that the traffic object 1200 has been detected, the state estimation device 100 determines that the traffic object 1200 is included in the image D11. When determining that the traffic object 1200 is not included in the image D11 (No in step S102), the state estimation device 100 advances the processing to step S103.

The state estimation device 100 determines whether a background image of the predetermined area D100 has been registered (step S103). If, for example, the background image of the predetermined area D100 imaged by the imaging device 10 has already been registered in the setting data 132, the database, or the like, the state estimation device 100 determines that the background image of the predetermined area D 100 or the like has already been registered. The background image is the image D11 that includes information for masking an area of a large-sized car, an ordinary car, or the like from the image data D10 and indicates the traffic environment 1000 that does not include the traffic object 1200. When determining that the background image of the predetermined area D 100 has been registered (Yes in step S103), the state estimation device 100 returns the processing to step S101 already described above, and continues the processing. When determining that the background image of the predetermined area D 100 has not been registered (No in step S103), the state estimation device 100 advances the processing to step S104.

The state estimation device 100 registers the background image of the image data D10 (step S104). For example, the state estimation device 100 registers the image D11 including the predetermined area D 100 of the image data D10 as the background image of the imaging device 10 in the setting data 132, the database, or the like. When finishing the processing in step S104, the state estimation device 100 returns the processing to step S101 already described above, and continues the processing.

When determining that the traffic object 1200 is included in the image D11 (Yes in step S102), the state estimation device 100 advances the processing to step S105. The state estimation device 100 determines whether or not a large-sized car exists in the predetermined area D100 of the image D11 (step S105). When, for example, the type estimated by the object estimation model M2 is a large-sized car, a large-sized special car, or the like as the traffic object 1200 that exists in the predetermined area D 100 of the image data D 10, the state estimation device 100 determines that the large-sized car exists in the predetermined area D 100 of the image D 11. When determining that the large-sized car does not exist in the predetermined area D 100 of the image D11 (No in step S105), the state estimation device 100 advances the processing to step S108 to be described later.

When determining that the large-sized car exists in the predetermined area D100 of the image D11 (Yes in step S105), the state estimation device 100 advances the processing to step S106. Similarly to step S103, the state estimation device 100 determines whether or not the background image of the predetermined area D100 has been registered (step S106). When determining that the background image of the predetermined area D 100 has not been registered (No in step S106), the state estimation device 100 returns the processing to step S101 already described above, and continues the processing. When determining that the background image of the predetermined area D100 has been registered (Yes in step S106), the state estimation device 100 advances the processing to step S107.

The state estimation device 100 masks the large-sized car in the image D11 (step S107). For example, the state estimation device 100 masks the large-sized car by replacing an area indicating the large-sized car in the image with the registered background image. When finishing the processing in step S107, the state estimation device 100 advances the processing to step S108.

The state estimation device 100 determines whether or not the traffic object 1200 facing the front exists in the predetermined area D100 of the image D11 (step S108). For example, when the traffic object 1200 existing in the predetermined area D100 of the image D11 indicated by the image data D10 faces the front, the state estimation device 100 determines that the traffic object 1200 facing the front exists in the predetermined area D100 of the image D 11. When the moving direction of the traffic object 1200 in the predetermined area D100 tracked in tracking process S100B is a direction that travels toward the imaging device 10, the state estimation device 100 determines that the traffic object 1200 facing the front exists in the predetermined area D 100 of the image D 11. When determining that the traffic object 1200 facing the front does not exist in the predetermined area D100 of the image D11 (No in step S108), the state estimation device 100 returns the processing to step S101 already described above, and continues the processing. When determining that the traffic object 1200 facing the front exists in the predetermined area D 100 of the image D11 (Yes in step S108), the state estimation device 100 advances the processing to step S109.

The state estimation device 100 supplies the image data D10 to the estimator 142 (step S109). For example, the state estimation device 100 associates the image data D10 in which the traffic object 1200 facing the front is included in the predetermined area D100 of the image data D10 with the imaging device 10 that has imaged the image data D10 and the estimation result to store in the storage 130, and thereby supplies the image data D10 to the estimator 142. When finishing the processing in step S109, the state estimation device 100 finishes the processing procedure illustrated in FIG. 7, and returns to object detection process S100A of pre-processing process S10 illustrated in FIG. 6.

When finishing object detection process S100A, the state estimation device 100 executes tracking process S100B. The state estimation device 100 traces back the image data D10 for a predetermined time, and tracks the moving direction of the traffic object 1200 detected in object detection process S100A.

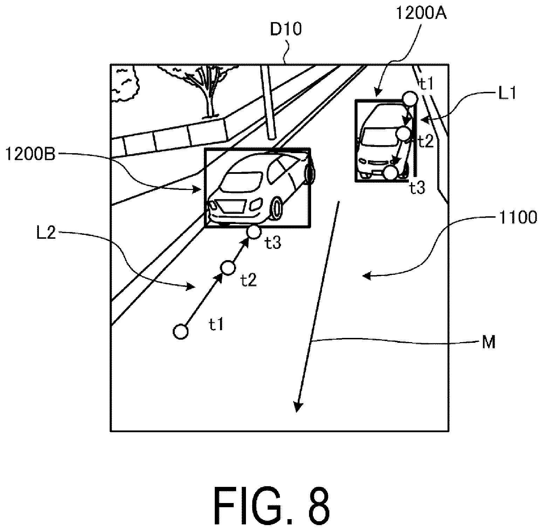

FIG. 8 is a diagram for describing an example of tracking processing of the image data D10 including the traffic object 1200. In the example illustrated in FIG. 8, a traffic object 1200A and a traffic object 1200B are detected from the image data D10 in object detection step S100A. The traffic object 1200 is a car that faces the front with respect to the imaging device 10. The traffic object 1200B is a car that does not face the front with respect to the imaging device 10.

The state estimation device 100 tracks moving directions (directions) of the traffic object 1200A and the traffic object 1200B by executing tracking process S100B. For example, the state estimation device 100 obtains a trajectory L1 of the traffic object 1200A and a trajectory L2 of the traffic object 1200B from the plurality of continuous image data D10 using tracking processing using a known Kalman filter. The trajectory L1 of the traffic object 1200A and the trajectory L2 of the traffic object 1200B continuously indicate the directions of the trajectories at times 11, t2, and t3.

In the example illustrated in FIG. 8, the imaging device 10 is installed so as to be able to image the road 1100 of two lanes extending along a road direction M. The image data D10 indicates that the direction of the trajectory L1 of the traffic object 1200A is an equal direction to the road direction M, and the traffic object 1200A faces the front with respect to the imaging device 10. The image data D10 indicates that the direction of the trajectory L2 of the traffic object 1200B is an opposite direction to the road direction M, and the traffic object 1200B does not face the front with respect to the imaging device 10.

When finishing tracking in tracking process S100B, the state estimation device 100 associates the moving direction of the tracked traffic object 1200 with the image data D10 to store in the storage 130. Thus, the state estimation device 100 can associate information about the direction of the traffic object 1200 with the image data D10 supplied to state estimation process S200, and thus can assist estimation of the installation state of the imaging device 10 that can switch the imaging direction.

As illustrated in FIG. 6, when finishing pre-processing process S100, the state estimation device 100 executes state estimation process S200. State estimation process S200 includes a process of estimating the installation state parameters of the imaging device 10 that has imaged the input image data D10 using the state estimation model M1 generated by the learning device 200 and subjected to machine learning. State estimation process S200 estimates a road area of the road 1100 in the image D11 indicated by the image data D 10 based on the installation state parameters estimated by the state estimation model M1. The state estimation device 100 associates the estimated installation state parameters and the road area with the image data D10 to store the storage 130.

When finishing state estimation process S200, the state estimation device 100 executes result diagnosis process S300. Result diagnosis process S300 includes a process of diagnosing whether or not the installation state parameters of the imaging device 10 estimated in state estimation process S200 are appropriate. Diagnosis on whether or not the installation state parameters of the imaging device 10 are appropriate includes diagnosing that the installation state parameters of the imaging device 10 are appropriate when the installation state parameters do not need to be, for example, reset or adjusted by the imaging device 10. The state estimation device 100 associates a diagnosis result with the imaging device 10 to store in the storage 130. When diagnosing that the installation state parameters of the imaging device 10 are suitable, the state estimation device 100 can supply the diagnosis result, the installation state parameter, and the like to post-processing. When diagnosing that the installation state parameters of the imaging device 10 are not suitable, the state estimation device 100 can perform imaging again using the imaging device 10, and estimate the installation state parameters using the imaged image data D10.

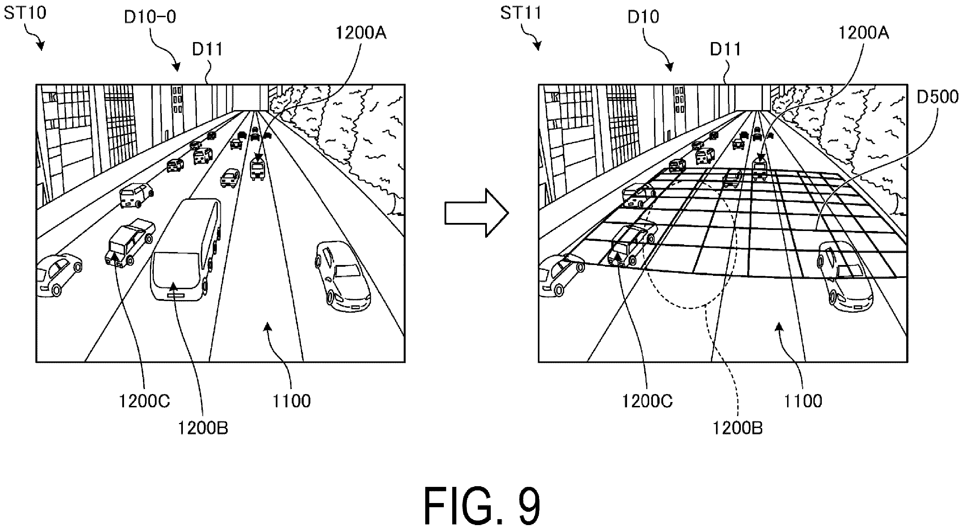

FIGs. 9 to 11 are diagrams for describing an estimation example of the installation state parameters of the state estimation device 100 according to the embodiment. In a scene ST10 illustrated in FIGs. 9 to 11, image data D10-0 obtained by the imaging device 10 by imaging the traffic environment 1000 is data indicating the same image D11 including the road 1100 and traffic objects 1200A, 1200B, and 1200C. The image data D10-0 is data before the state estimation device 100 executes pre-processing process S100. The traffic object 1200A is a car that faces the front with respect to the imaging device 10. The traffic object 1200B is a large-sized car that faces the front with respect to the imaging device 10. The traffic object 1200C is a car that does not face the front with respect to the imaging device 10.

In a scene ST11 illustrated in FIG. 9, when acquiring the image data D10-0 imaged by the imaging device 10, the state estimation device 100 executes pre-processing process D10 with respect to the image data S10-0. The state estimation device 100 inputs the image data D10-0 to the object estimation model M2, and determines based on an estimation result of the object estimation model M2 that three objects of the traffic objects 1200A, 1200B, and 1200C are included in the image D11.

When a large-sized car, a construction machine, or the like exists near the center of the image D11, there is a probability that the state estimation model M1 according to the present embodiment has lower accuracy of estimating the installation state parameters of the imaging device 10. Accordingly, in the scene ST11, the state estimation device 100 performs processing of masking using a background image a portion of the image D11 indicating the traffic object 1200B of the large-sized car that exists facing the front, and supplies the image data D10 to state estimation process S200. The state estimation device 100 inputs the processed image data D10 to the state estimation model M1, and obtains the installation state parameters of the imaging device 10 estimated by the state estimation model M1. The state estimation device 100 estimates a road area D500 of the road 1100 in the image D11 indicated by the image data D10 based on the obtained installation state parameters, and stores in the storage 130 the image data D10 obtained by adding the road area D500 to the image D11. Thus, the state estimation device 100 can input, to the state estimation model M1, the image data D10 that includes the traffic object 1200A that can be used for estimation and in which the traffic object 1200B that is unnecessary for estimation has been deleted from the image D11. As a result, the state estimation device 100 can improve the estimation accuracy of the installation state parameters as compared with the case where the image data D10-0 that is not processed is input to the state estimation model M1.

In the present embodiment, a case will be described where the state estimation device 100 deletes the unnecessary traffic object 1200 from the image D11, yet is not limited thereto. There is a probability that the traffic object 1200 disappears from the imaging area of the imaging device 10 to the outside in response to movement. Accordingly, the state estimation device 100 may perform processing of extracting the image data D10 that does not include the unnecessary traffic object 1200 from the plurality of image data D10 imaged in chronological order instead of deleting the unnecessary traffic object 1200.

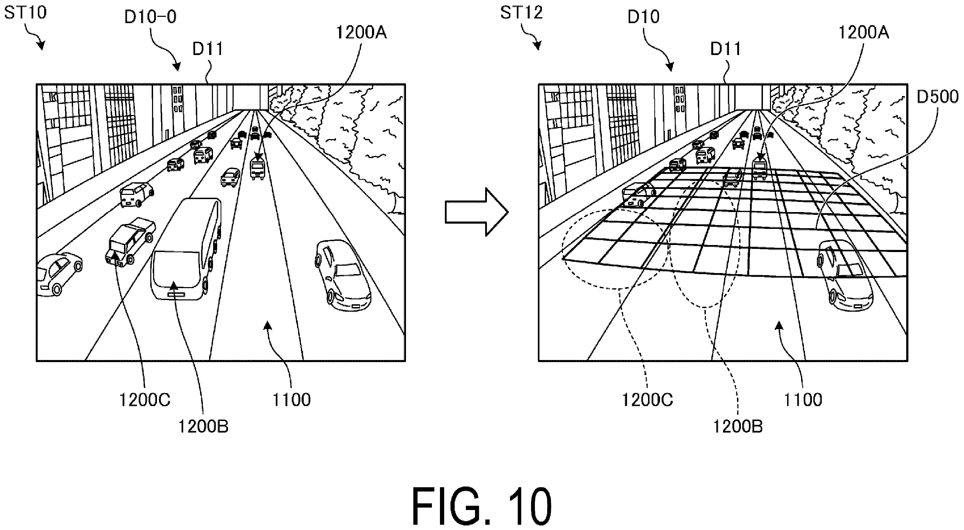

In the scene ST10 illustrated in FIG. 10, the accuracy of the state estimation model M1 for estimating the installation state parameters of the imaging device 10 may not change even if the traffic object 1200 that is close to the edge of the image D11 and does not face the front is erased. Accordingly, in a scene ST12 illustrated in FIG. 10, the state estimation device 100 performs processing of masking the traffic object 1200B in the image data D10-0 illustrated in the scene ST10 and masking using a background image a portion of the image D11 indicating the traffic object 1200C that is close to the left end. The state estimation device 100 supplies the processed image data D10 to state estimation process S200. In this case, the state estimation device 100 inputs the processed image data D10 to the state estimation model M1, and obtains the installation state parameters of the imaging device 10 estimated by the state estimation model M1. The state estimation device 100 estimates the road area D500 of the road 1100 in the image D11 indicated by the image data D10 based on the obtained installation state parameters, and stores in the storage 130 the image data D10 obtained by adding the road area D500 to the image D11. Thus, the state estimation device 100 can input, to the state estimation model M1, the image data D10 that includes the traffic object 1200A that can be used for estimation and in which the traffic object 1200B and the traffic object 1200C that are unnecessary for estimation have been deleted from the image D11. As a result, the state estimation device 100 can improve the estimation accuracy of the installation state parameters as compared with the case where the image data D10-0 that is not processed is input to the state estimation model M1.

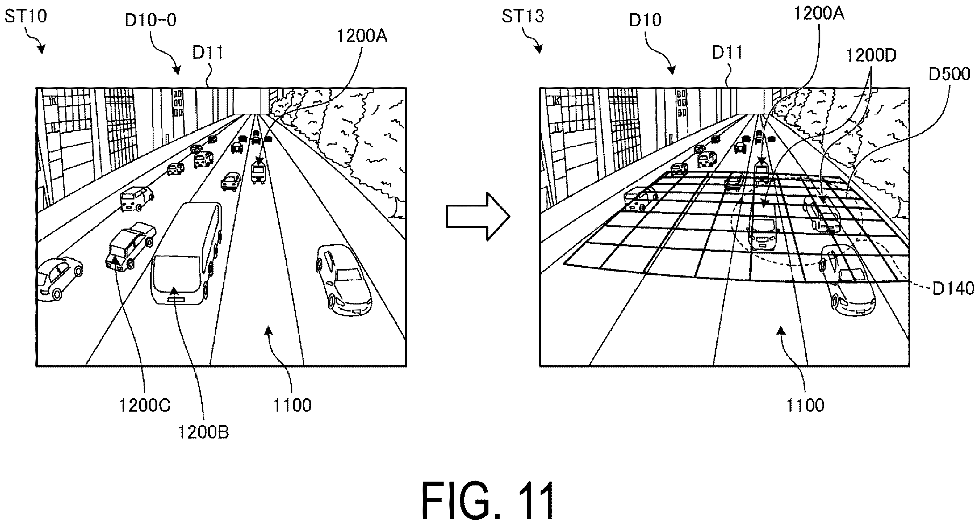

In the example illustrated in the scene ST10 in FIG. 11, accuracy of the state estimation model M1 for estimating the installation state parameters of the imaging device 10 improves when there are a plurality of cars facing the front near the center of the image D 11. Accordingly, in the scene ST13 illustrated in FIG. 11, the state estimation device 100 performs processing of adding an image of a traffic object 1200D to a setting area D140 near the center of the image D11 to the image data D 10-0 indicated in the scene ST10D, and supplies the image data D10 to state estimation process S200. The image to be added to the setting area D 140 includes, for example, an image of the traffic object 1200 imaged by the imaging device 10 in the past, and an image of the traffic object 1200 registered in advance in the database. The state estimation device 100 acquires a traffic object image indicating the traffic object 1200D from the database, the past image data D10, or the like, and masks using the traffic object image a portion of the road 1100 indicated by the image data D10-0. Thus, the state estimation device 100 can input, to the state estimation model M1, the image data D10 that includes the traffic object 1200A that can be used for estimation and the added traffic object 1200D, and in which the traffic object 1200B that is unnecessary for estimation and the traffic object 1200C have been deleted from the image D11. As a result, the state estimation device 100 can improve the estimation accuracy of the installation state parameters as compared with the case where the image data D10-0 that is not processed is input to the state estimation model M1.

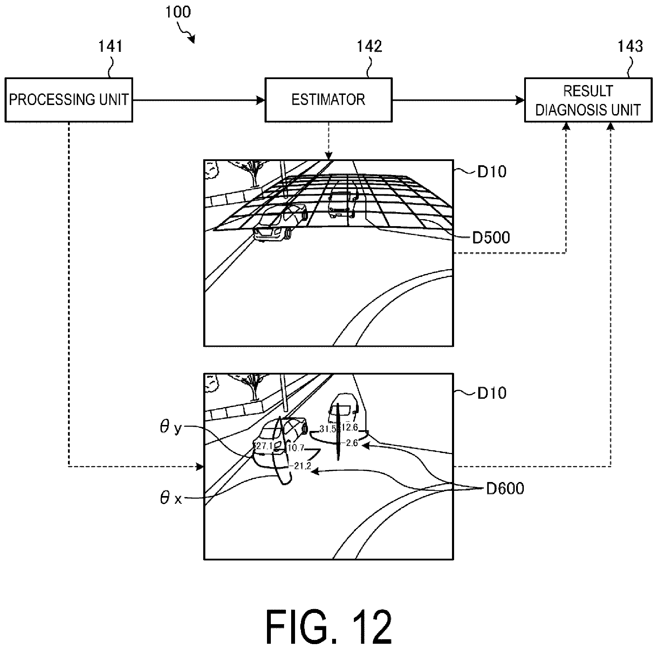

FIG. 12 is a diagram for describing another example of result diagnosis executed by the state estimation device 100. The state estimation device 100 illustrated in FIG. 12 can use the object estimation model M2 subjected to machine learning so as to further estimate the direction of the traffic object 1200 in the traffic environment 1000 indicated by the input image data D10.

The object estimation model M2 is a learning model generated by extracting features, regularity, patterns, a bird's-eye view state, and the like of the traffic object 1200 in the image data D10 using the image data D10 and the correct value data D22 included in the training data 242, and performing machine learning on the relationship with the correct value data D22. The bird's-eye view state of the traffic object 1200 includes a state such as an object position (θ x and θ y) and the height of the traffic object 1200 obtained when the traffic object 1200 is imaged at an angle at which the imaging device 10 looks down on the traffic object 1200. When receiving an input of the image data D 10, the object estimation model M2 predicts data similar to the image data D10 from the training data 242, and cross-checks the data with the correct value data D22 to estimate the position, the size, the type, a bird's-eye view state, and the like of the traffic object 1200 (object) in the image D11 indicated by the image data D10, and output an estimation result.

In the state estimation device 100, the processing unit 141 inputs the image data D10 to the object estimation model M2, and the storage 130 stores the bird's-eye view state of the traffic object 1200 in the image D11 based on the estimation result output from the object estimation model M2. In the state estimation device 100, when the processing unit 141 processes the image data D10, the estimator 142 inputs the image data D10 to the state estimation model M1. In the state estimation device 100, the estimator 142 obtains the installation state parameters of the imaging device 10 from the estimation result output by the state estimation model M1.

The state estimation device 100 applies the estimated installation state parameters to a calculation formula, a conversion table, or the like to calculate the orientation of the traffic object 1200 in the image D11. In the state estimation device 100, the diagnosis unit 143 compares the orientation estimated from how the traffic object 1200 in the image data D10 actually looks, and the bird's-eye view state of the traffic object 1200, and obtains an error between the state and the bird's-eye view state of the traffic object 1200 obtained when the imaging device 10 images the traffic object 1200 with the installation state parameters. The setting data 132 of the storage 130 has the determination threshold value for determining the error of the estimation result. The determination threshold value is a threshold value set to determine that the error of reliability is small. When the obtained error is the determination threshold value or more set to the setting data 132, the state estimation device 100 determines that the reliability of the estimation result of the estimator 142 is low. In this case, the state estimation device 100 does not supply to the post-processing the installation state parameters of the imaging device 10 estimated from the image data D10. The post-processing includes, for example, processing related to installation, maintenance, and the like of the imaging device 10 based on the installation state parameters. The state estimation device 100 acquires the new image data D10 from the imaging device 10 as necessary, and estimates the installation state parameters of the imaging device 10 using the image data D10.

When the obtained error is smaller than the determination threshold value set to the setting data 132, the state estimation device 100 determines that the reliability of the estimation result of the estimator 142 is high. In this case, the state estimation device 100 supplies to the post-processing the installation state parameters of the imaging device 10 estimated from the image data D10. Thus, the state estimation device 100 make a jig used for calculation of the installation state of the imaging device 10 unnecessary, and estimate the installation state parameters using the image data D10 imaged by the imaging device 10. As a result, the state estimation device 100 makes it unnecessary to perform road regulation work such as installation and check of the imaging device 10, and can contribute to spreading the use of the system 1.

A case has been described where the above-described state estimation device 100 is provided outside the imaging device 10. However, the above-described state estimation device 100 is not limited thereto. For example, the state estimation device 100 may be incorporated in the imaging device 10 and implemented as a controller, a module, or the like of the imaging device 10. For example, the state estimation device 100 may be incorporated in traffic signals, lighting devices, communication devices, or the like installed in the traffic environment 1000.

The above-described state estimation device 100 may be implemented as a server device or the like. For example, the state estimation device 100 may be a server device that acquires the image data D10 from each of the plurality of imaging devices 10, estimates the installation state parameters from the image data D10, and provides the estimation result.

A case where the above-described learning device 200 generates the state estimation model M1 and the object estimation model M2 will be described. However, the learning device 200 is not limited thereto. For example, the learning device 200 may include two devices of a first device that generates the state estimation model M1, and a second device that generates the object estimation model M2.

The present disclosure is not limited to a case where the state estimation model M1 and the object estimation model M2 are implemented as separate models and by separate learning units, but may be an example where both the models are integrated as an integrated model, and machine learning is also performed by one integrated machine learning unit. In other words, the present disclosure may include an example where machine learning is executed using one model and one learning unit.

Embodiments have been described in order to fully and clearly disclose the technique according to the appended claims. However, the appended claims are not to be limited to the embodiments described above and may be configured to embody all variations and alternative configurations that those skilled in the art may make within the underlying matter set forth herein.

### Supplementary Note

### (Supplementary Note 1: state estimator + diagnosis unit)

A state estimation device includes: an estimator configured to estimate an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and a diagnosis unit configured to diagnose an installation state of the imaging device based on the estimated installation state parameter.

### (Supplementary Note 2: Supplementary Note 1 + pre-processor)

The state estimation device described in Supplementary Note 1 further includes a processor configured to perform processing such that the image data obtained by the imaging device having imaged the traffic environment includes a traffic object that can be used for the estimation, and
the estimator inputs the image data processed by the processor to the state estimation model and estimates the installation state parameter of the imaging device.

### (Supplementary Note 3)

In the state estimation device described in Supplementary Note 2, the processor performs the processing such that the image data includes an image in which the traffic object exists in a predetermined area and/or an image in which the traffic object faces toward the imaging device.

### (Supplementary Note 4: pre-processor uses second machine learning)

In the state estimation device described in Supplementary Note 2 or 3, the processor performs processing, based on an estimation result, such that the image data obtained by the imaging device having imaged the traffic environment comprises the traffic object used for the estimation, by using an object estimation model subjected to machine learning to estimate at least one selected from a group consisting of a position, a size, and a type of the traffic object in the traffic environment indicated by the input image data, the second training data comprising the image data and second correct value data for object detection in the image data, and the estimation result being obtained by estimating the at least one selected from the group of the position, the size, and type of the traffic object in the traffic environment indicated by the input image data.

### (Supplementary Note 5)

In the state estimation device described in Supplementary Note 4, the object estimation model is a model subjected to machine learning to further estimate a direction of the traffic object in the traffic environment indicated by the input image data, and
the processor performs processing, by using the object estimation model, such that the image data includes the traffic object approaching the imaging device.

### (Supplementary Note 6)

In the state estimation device described in any one of Supplementary Notes 2 to 5, the processor processes the image data such that the traffic object that is unnecessary for the estimation of the installation state parameter of the imaging device is changed or deleted from the image.

### (Supplementary Note 7)

In the state estimation device described in any one of Supplementary Notes 2 to 6, the traffic object that is unnecessary for the estimation of the installation state parameter of the imaging device is at least one selected from a group consisting of a truck, a passenger car, and a construction machine that exist in a predetermined area of an image indicated by the image data.

### (Supplementary Note 8)

In the state estimation device described in any one of Supplementary Notes 2 to 7, the processor selects, from a plurality of pieces of the image data obtained in chronological order through the imaging, the image data that includes the traffic object that is used for the estimation of the installation state parameter of the imaging device and does not include the traffic object that is unnecessary for the estimation.

### (Supplementary Note 9)

In the state estimation device described in any one of Supplementary Notes 2 to 8, the processor adds the traffic object that can be used for the estimation of the installation state parameter to a preset setting area of the image data.

### (Supplementary Note 10)

In the state estimation device described in any one of Supplementary Notes 2 to 9, the processor determines a moving direction of the traffic object based on a plurality of pieces of the image data obtained in chronological order through the imaging, and performs the processing based on a determination result such that the image data comprises the traffic object used for the estimation.

### (Supplementary Note 11)

In the state estimation device described in Supplementary Note 10, the processor determines the moving direction of the traffic object using tracking processing, and performs the processing based on a determination result such that the image data includes the traffic object used for estimation.

### (Supplementary Note 12)

In the state estimation device described in any one of Supplementary Notes 2 to 11, the diagnosis unit diagnoses an installation state of the imaging device based on the installation state parameter estimated by the estimator and a bird's-eye view state of the traffic object indicated by the image data.

### (Supplementary Note 13)

In the state estimation device described in Supplementary Note 12, the diagnosis unit compares an orientation of the traffic object indicated by the image data, and an orientation of the traffic object calculated based on the installation state parameter estimated by the estimator, and diagnoses the installation state of the imaging device when a degree of coincidence is higher than a determination threshold value.

### (Supplementary Note 14)

In the state estimation device described in supplementary note 13, when the degree of coincidence is equal to or less than a determination threshold value, the diagnosis unit causes the estimator to estimate the installation state parameter based on the next image data obtained by the imaging device through the imaging.

### (Supplementary Note 15: hereinafter, independent Supplementary Note of machine learning of installation state)

A learning device includes:
a first acquirer configured to acquire first training data including image data obtained by imaging a traffic environment including a traffic object, and first correct value data of an installation state parameter of an imaging device having obtained the image data through imaging; and
a first machine learning unit configured to generate a state estimation model for estimating the installation state parameter of the imaging device having obtained the input image data through imaging, by using machine learning that uses the first training data.

### (Supplementary Note 16)

In the learning device described in Supplementary Note 15, the first correct value data includes a combination of at least two selected from a group consisting of an installation angle, a height, and an installation position of the imaging device.

### (Supplementary Note 17: machine learning of object detection)

The learning device described in Supplementary Note 15 or 16 includes:
a second acquirer configured to acquire second training data including the image data obtained by the imaging device by imaging the traffic environment, and second correct value data of object detection in the image data; and
a second machine learning unit configured to generate an object estimation model for estimating at least one selected from a group consisting of a position, a size, and a type of the traffic object in the traffic environment indicated by the input image data by machine learning that uses the second training data, and
the second correct value data includes data indicating at least one selected from the group consisting of a position, a size, and a type of the traffic object and the number of the traffic obj ects.

### (Supplementary Note 18: Independent Supplementary Note of Method)

An state estimation method includes:
estimating, by a computer, an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and
diagnosing, by the computer, an installation state of the imaging device based on the estimated installation state parameter.

### (Supplementary Note 19: independent Supplementary Note of program)

An state estimation program causing a computer to execute:
estimating an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and
diagnosing an installation state of the imaging device based on the estimated installation state parameter.

### REFERENCE SIGNS

1 System
10 Imaging device
100 State estimation device
110 Input unit
120 Communicator
130 Storage
131 Program
132 Setting data
140 Controller
141 Processor
142 Estimator
143 Diagnosis unit
200 Learning device
210 Display
220 Operation inputter
230 Communicator
240 Storage
241 Program
242 Training data
250 Controller
251 First acquirer
252 First machine learning unit
253 Second acquirer
254 Second machine learning unit
1000 Traffic environment
1100 Road
1200 Traffic object
2100 Input layer
2200 Intermediate layer
2210 Feature extraction layer
2220 Connected layer
2300 Output layer
D10 Image data
D11 Image
D21 Correct value data
D22 Correct value data
D100 Predetermined area
M1 State estimation model
M2 Object estimation model

## Claims

1. A state estimation device comprising:
an estimator configured to estimate an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and
a diagnosis unit configured to diagnose an installation state of the imaging device based on the estimated installation state parameter.

2. The state estimation device according to claim 1, further comprising a processor configured to perform processing such that the image data obtained by the imaging device having imaged the traffic environment comprises a traffic object that can be used for the estimation,
wherein the estimator inputs the image data processed by the processor to the state estimation model and estimates the installation state parameter of the imaging device.

3. The state estimation device according to claim 2, wherein the processor performs processing such that the image data comprises an image in which the traffic object exists in a predetermined area and/or an image in which the traffic object faces toward the imaging device.

4. The state estimation device according to claim 2, wherein the processor performs processing, based on an estimation result, such that the image data obtained by the imaging device having imaged the traffic environment comprises the traffic object used for the estimation, by using an object estimation model subjected to machine learning to estimate at least one selected from a group consisting of a position, a size, and a type of the traffic object in the traffic environment indicated by the input image data, the second training data comprising the image data and second correct value data for object detection in the image data, and the estimation result being obtained by estimating the at least one selected from the group of the position, the size, and type of the traffic object in the traffic environment indicated by the input image data.

5. The state estimation device according to claim 4, wherein
the object estimation model is a model subjected to machine learning to further estimate a direction of the traffic object in the traffic environment indicated by the input image data, and
the processor performs processing, by using the object estimation model, such that the image data includes the traffic object approaching the imaging device.

6. The state estimation device according to claim 2, wherein the processor processes the image data such that the traffic object that is unnecessary for the estimation of the installation state parameter of the imaging device is changed or deleted from the image.

7. The state estimation device according to claim 2, wherein the traffic object that is unnecessary for the estimation of the installation state parameter of the imaging device is at least one selected from a group consisting of a truck, a passenger car, and a construction machine that exists in a predetermined area of an image indicated by the image data.

8. The state estimation device according to claim 2, wherein the processor selects, from a plurality of pieces of the image data obtained in chronological order through the imaging, the image data that comprises the traffic object that is used for the estimation of the installation state parameter of the imaging device and does not comprise the traffic object that is unnecessary for the estimation.

9. The state estimation device according to claim 2, wherein the processor adds the traffic object that can be used for the estimation of the installation state parameter to a preset setting area of the image data.

10. The state estimation device according to claim 2, wherein the processor determines a moving direction of the traffic object based on a plurality of pieces of the image data obtained in chronological order through the imaging, and performs the processing based on a determination result such that the image data comprises the traffic object used for the estimation.

11. The state estimation device according to claim 10, wherein the processor determines the moving direction of the traffic object using tracking processing, and performs the processing based on the determination result such that the image data comprises the traffic object used for the estimation.

12. The state estimation device according to claim 2, wherein the diagnosis unit diagnoses an installation state of the imaging device based on the installation state parameter estimated by the estimator and a bird's-eye view state of the traffic object indicated by the image data.

13. The state estimation device according to claim 12, wherein the diagnosis unit compares an orientation of the traffic object indicated by the image data, and an orientation of the traffic object calculated based on the installation state parameter estimated by the estimator, and diagnoses the installation state of the imaging device when a degree of coincidence is higher than a determination threshold value.

14. A state estimation method comprising:
estimating, by a computer, an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and
diagnosing, by the computer, an installation state of the imaging device based on the estimated installation state parameter.

15. A state estimation program causing a computer to execute:
estimating an installation state parameter of an imaging device having obtained image data through imaging, by using a state estimation model subjected to machine learning to estimate the installation state parameter of the imaging device having obtained the input image data through the imaging, the machine learning using first training data comprising the image data obtained by the imaging device having imaged a traffic environment and first correct value data of the installation state parameter of the imaging device having obtained the input image data through the imaging; and
diagnosing an installation state of the imaging device based on the estimated installation state parameter.
